# EUROPEAN PATENT APPLICATION

(11) **EP 4 575 578 A1**
(43) Date of publication of application: **25.06.2025**
(21) Application number: 24806183.0
(22) Date of filing: 19.03.2024
(51) Int. Cl.: G01S 17/894, G01S 17/10, G01S 17/50, H04M 1/72454

(54) **TOF SENSOR MODULE AND ELECTRONIC DEVICE**

(30) Priority: 16.05.2023 CN 202310549556
(71) Applicant: Honor Device Co., Ltd., Shenzhen, Guangdong 518040 (CN)
(72) Inventor: LIU, Zhongxing, Shenzhen, Guangdong 518040 (CN); FENG, Xiaogang, Shenzhen, Guangdong 518040 (CN)
(74) Representative: Isarpatent
(86) International application number: PCT/CN2024/082532
(87) International publication number: WO 2024/234823

(57) **Abstract**

Embodiments of this application provide a TOF sensing module and an electronic device. The TOF sensing module includes: a light source, configured to provide first infrared light and second infrared light for a target object; and a drive control unit, connected to a control end of the light source, and configured to drive, when the electronic device uses a TOF function, the light source to provide the first infrared light for the target object. The control end of the light source is further connected to a proximity light receiving sensor, and the receiving sensor is configured to drive, when the electronic device uses a proximity light function, the light source to provide the second infrared light for the target object. The control end of the light source in the TOF sensing module is electrically connected to the receiving sensor of a proximity light sensor. In addition, through timing control, infrared light is provided for a TOF sensor and the proximity light sensor respectively through the light source, so that a quantity of light sources in a conventional proximity light sensor is effectively reduced. This is conducive to reducing a quantity of used devices, saving internal space of the electronic device, and reducing design complexity.

## Description

This application claims priority to Chinese Patent Application No. 202310549556.5, filed with the China National Intellectual Property Administration on May 16, 2023 and entitled "TOF SENSING MODULE AND ELECTRONIC DEVICE", which is incorporated herein by reference in its entirety.

### TECHNICAL FIELD

This application relates to the field of terminal technologies, and in particular, to a TOF sensing module and an electronic device.

### BACKGROUND

Usually, a proximity light sensor is built in a front of an electronic device. Through the proximity light sensor, whether an object is approaching the electronic device can be detected, so that screen-off can be implemented during a call to avoid a misoperation. A time of flight (time of flight, TOF) sensor is further disposed in the electronic device, and the TOF sensor is widely used in three-dimensional (3 dimensions, 3D) imaging technology. A working principle of the TOF sensor is to continuously emit infrared light to the object. After the infrared light is reflected back to the sensor by the object, the sensor can calculate a distance between the sensor and the object based on a time difference between emission and reception, and can implement a function such as 3D face unlocking.

However, the proximity light sensor and the TOF sensor are independently disposed in the electronic device, occupying large space inside the electronic device.

### SUMMARY

This application provides a TOF sensing module and an electronic device. In this way, a quantity of light sources in a conventional proximity light sensor can be reduced, a quantity of used devices is reduced, internal space of the electronic device is saved, and design complexity is reduced.

According to a first aspect, a TOF sensing module is provided. The TOF sensing module includes a light source, configured to emit first infrared light and second infrared light to a target object; and a drive control unit, connected to a control end of the light source, and configured to drive, when the electronic device uses a TOF function, the light source to emit the first infrared light to the target object. The control end of the light source is further connected to a proximity light receiving sensor, and the receiving sensor is configured to drive, when the electronic device uses a proximity light function, the light source to emit the second infrared light to the target object.

The first infrared light is infrared light required to satisfy the TOF function. For example, the light source in the TOF sensing module may be an LED or a laser tube (such as a laser diode or a VCSEL). The light source emits high-frequency modulated pulsed light, which is infrared light with a frequency of 1000 MHz and a wavelength of 800 nm to 1000 nm. In addition, the infrared light required for the TOF has a high peak power.

The second infrared light is infrared light required to satisfy the proximity light function. For example, a VSCEL in the light source emits infrared light in a near-infrared spectral band, such as an infrared light pulse with a wavelength of 780 nm, 850 nm, or 940 nm.

The TOF function includes, but is not limited to a 3D face unlocking function, a background blur function, an HDR image acquisition function, and the like. The proximity light function includes, but is not limited to a function of automatic screen-off during a call, a function of automatic screen-locking in a pocket mode to prevent mistouch, and the like.

Infrared light reflected after the first infrared light reaches the target object may be received by a receiving end module of the TOF sensing module, and times of flight of infrared light reflected at different positions of the target object are obtained, to obtain distances between the electronic device and the different positions of the target object. In this way, depth information can be generated, and corresponding image information is generated, to assist a mobile phone in implementing the TOF function such as 3D face unlocking or depth of field judgment.

Infrared light reflected after the second infrared light reaches the target object may be received by the proximity light receiving sensor, and a distance between the mobile phone and the target object is obtained through calculation, to determine whether an object is approaching the electronic device. In this way, the proximity light function such as screen-off during a call is implemented.

It can be seen from the foregoing that, according to the TOF sensing module provided in this embodiment of this application, the light source in the TOF sensing module is multiplexed, and the light source in the TOF sensing module is configured to separately provide infrared light for the TOF function and the proximity light function. In this way, without changing an internal structure of the receiving end module of an original TOF sensor and an internal structure of an original P sensor, the TOF function and the proximity light function can be implemented, a quantity of light source devices in an original proximity light sensor can be reduced, and design complexity is reduced. This is conducive to simplifying a structure of a device, and reducing hardware costs and saving space of the electronic device, and is easy to implement.

In a possible implementation of the first aspect, the drive control unit includes a first control port, and the receiving sensor includes a second control port.

The control end of the light source is separately connected to the first control port and the second control port. When the electronic device uses the TOF function, the first control port outputs a first driving signal to drive the light source to emit the first infrared light, and the second control port is in a high-resistance state. When the electronic device uses the proximity light function, the first control port is in a high-resistance state, and the second control port outputs a second driving signal to drive the light source to emit the second infrared light.

Output states of the first control port and the second control port are controlled. When the TOF function is used, infrared light is provided for the TOF function through the light source, and the second control port is caused to be in the high-resistance state, that is, the second control port does not output the second driving signal. When the proximity light function is used, infrared light is provided for the proximity light function through the light source, and the first control port is caused to be in the high-resistance state, that is, the first control port does not output the first driving signal. Therefore, time-division multiplexing of the light source is effectively implemented.

In a possible implementation of the first aspect, the light source includes a laser emitter, a cathode of the laser emitter is the control end of the light source, and an anode of the laser emitter is connected to a power supply.

The infrared light can be emitted and controlled efficiently by using the laser emitter.

The laser emitter includes, but is not limited to, a vertical cavity surface-emitting laser (vertical cavity surface-emitting laser, VCSEL), and the cathode of the VCSEL is electrically connected to the first control port of the drive control unit and the second control port of the receiving sensor respectively.

The laser emitter may alternatively be another type of laser emitter such as an edge-emitting laser (edge-emitting laser, EEL).

In a possible implementation of the first aspect, the drive control unit includes a drive chip (driver IC). The drive chip is connected to a processor of the electronic device, and is configured to output a first driving signal based on a first control signal output by the processor.

The processor is further connected to the receiving sensor, and the receiving sensor is further configured to output a second driving signal based on a second control signal output by the processor.

The first driving signal is output by the driver IC to drive the laser emitter to emit a modulated optical signal, for example, emit first infrared light with a high modulation frequency and a high peak power.

In a possible implementation of the first aspect, the TOF sensing module further includes a receiving end module, and the receiving end module is configured to receive and analyze data of the first infrared light reflected by the target object, to obtain distance information of a plurality of positions of the target object.

The receiving sensor is further configured to receive and analyze data of the second infrared light reflected by the target object, to obtain information about a distance between the target object and the electronic device.

The receiving end module may include a TOF sensor. The TOF sensor may implement the analysis of the data of the first infrared light reflected by the target object, and then obtain the distance information of the plurality of positions of the target object, or obtain image information of the target object. In addition, the TOF sensor may further transmit back the obtained image information to the processor, and the processor executes control such as 3D face unlocking based on the image information of the target object.

The P sensor may implement the analysis of the data of the second infrared light reflected by the target object, then obtain the information about the distance between the target object and the mobile phone, and transmit back the obtained information about the distance between the target object and the mobile phone to the processor. The processor determines whether the target object is approaching the electronic device and executes, based on a determining result, a corresponding action of controlling the electronic device.

That is, the information about the distance can be obtained through the TOF sensing module, the determining is performed based on the obtained information about the distance, and the electronic device is controlled, based on the determining result, to perform a corresponding operation.

In a possible implementation of the first aspect, the light source includes a first light-emitting area and a second light-emitting area. An anode of the first light-emitting area and an anode of the second light-emitting area are commonly connected to the power supply. A cathode of the first light-emitting area is connected to the drive control unit, and a cathode of the second light-emitting area is connected to the receiving sensor.

Because the P sensor and the diver IC share the cathode of the laser emitter, when the light source 10a emits the first infrared light, an equivalent capacitance of the TOF sensing module is additionally provided in a wire connecting the P sensor to the laser emitter. This may cause rise time (rise time, TR) and fall time (fall time, TF) of a laser emitted by the laser emitter to increase, thereby causing LC oscillation of a circuit and affecting emission and reception effects of infrared light.

The anodes of the first light-emitting area and the second light-emitting area are commonly connected to the same power supply, and the cathodes are connected separately. To be specific, the cathode of the first light-emitting area is connected to the control port of the drive control unit of the TOF sensing module, and the cathode of the second light-emitting area is connected to the control port of the proximity light receiving sensor. In this way, the TOF sensing module can control the first light-emitting area to emit the first infrared light through the drive control unit, and can control the second light-emitting area to emit the second infrared light through the P sensor.

Because different light-emitting areas are used for providing infrared light for different functions, the TOF sensing module provided in this embodiment can simultaneously implement the TOF function and the proximity light function. To be specific, while controlling the first control port LD OUT of the drive control unit 10b to output the first driving signal, the processor may control the second control port P OUT of the receiving sensor 1022 to output the second driving signal. In this way, while the first light-emitting area 10a1 emits the first infrared light, the second light-emitting area 10a2 emits the second infrared light. In addition, an equivalent capacitance of a TOF system is prevented from being additionally provided, thereby improving TOF performance.

In a possible implementation of the first aspect, the light source includes a VSCEL array. VSCELs in the VSCEL array include VSCELs corresponding to the first light-emitting area and VSCELs corresponding to the second light-emitting area.

In an implementation of the first aspect, a quantity of the VSCELs corresponding to the first light-emitting area is greater than a quantity of the VSCELs corresponding to the second light-emitting area.

Because a quantity of rays of infrared light required by the TOF function is greater than a quantity of rays of infrared light required by the proximity light function, during division of the VSCEL array into the first light-emitting area and the second light-emitting area, the quantity of the VSCELs corresponding to the first light-emitting area may be set to be greater than the quantity of the VSCELs corresponding to the second light-emitting area, to ensure that the first infrared light and the second infrared light can satisfy a requirement.

It should be noted that, the light source may alternatively be provided with a window opening area, a laser is emitted through the window opening area, and one VSCEL is disposed below each window opening area.

According to a second aspect, an embodiment of this application provides an electronic device, including the TOF sensing module according to any one of the first aspect and a proximity light receiving sensor, where the receiving sensor is connected to a light source of the TOF sensing module, and a processor, where the processor is separately connected to a drive control unit of the TOF sensing module and the receiving sensor, and is configured to: control, when the electronic device uses a TOF function, the drive control unit to drive the light source to emit first infrared light; and control, when the electronic device uses a proximity light source, the receiving sensor to drive the light source to emit second infrared light.

The processor may include, but is not limited to, a processor such as a system-on-chip (System-on-Chip, SOC), an AP (Application Processor), or a sensor hub of the electronic device.

For example, the processor is the sensor hub. An output state of a first control port of a driver IC and an output state of a second control port of a P sensor are controlled by the sensor hub. Specifically, when the electronic device uses the TOF function, the sensor hub controls the control port of the driver IC to output a first driving signal (which may be specifically a pulse modulation signal, a continuous pulse signal, or the like) capable of driving a VCSEL to emit the first infrared light, and controls the second control port of the P sensor to be in a high-resistance state and not to output a second driving signal. When the electronic device uses the proximity light function, the sensor hub controls the second control port of the P sensor to output a second driving signal capable of driving a VCSEL to emit the second infrared light, and controls the first control port of the driver IC to be in a high-resistance state and not to output a first driving signal.

The processor can output a corresponding control signal based on a function used by the electronic device, to drive the light source to provide infrared light for different functions, so that a quantity of light source devices in an original proximity light sensor is reduced, and design complexity is reduced. This is conducive to simplifying a structure of a device, and reducing hardware costs and saving space of the electronic device, and is easy to implement.

In a possible implementation of the second aspect, the light source includes a first light-emitting area and a second light-emitting area, and the processor is configured to: output a control signal to the drive control unit when the electronic device uses the TOF function, to cause the drive control unit to drive the first light-emitting area to emit the first infrared light; and output a control signal to the receiving sensor when the electronic device uses the proximity light function, to cause the receiving sensor to drive the second light-emitting area to emit the second infrared light.

When the electronic device needs to use the TOF function, the processor can output the first driving signal through the first control port of the drive control unit 10b, to drive a VSCEL in the first light-emitting area to emit the first infrared light. When the electronic device needs to use the proximity light function, the processor can control the second control port of the proximity light receiving sensor to output the second driving signal, to drive a VSCEL in the second light-emitting area to emit the second infrared light.

The TOF function and the proximity light function may work simultaneously. In addition, an equivalent capacitance of a TOF system is prevented from being additionally provided, thereby improving TOF performance.

### BRIEF DESCRIPTION OF DRAWINGS

FIG. 1 is a diagram of an electronic device in a conventional technology;
FIG. 2 is a diagram of a structure of a transmitting end module of a TOF sensor 101 according to some embodiments in a conventional technology;
FIG. 3 is a diagram of a structure of a proximity light sensor according to some embodiments in a conventional technology;
FIG. 4 is a schematic of a structure of a circuit in which a current TOF sensor 101 drives, through a driver IC, a VSCEL to emit infrared light and a proximity light sensor 1022 drives a VSCEL to emit infrared light;
FIG. 5 is a diagram of a structure of a hardware structure of an electronic device according to an embodiment of this application;
FIG. 6 is a diagram of an operating state of a TOF sensing module according to some embodiments of this application;
FIG. 7 is a diagram of a structure of a TOF sensing module according to an embodiment of this application;
FIG. 8 is a schematic of a structure of a circuit of a TOF sensing module according to an embodiment of this application;
FIG. 9 is a diagram of a structure of another TOF sensing module according to an embodiment of this application;
FIG. 10 is a diagram of a connection manner for area-based control of a laser emitter in a conventional technology; and
FIG. 11 is a diagram of a first light-emitting area and a second light-emitting area of a light source according to an embodiment of this application.

### DESCRIPTION OF EMBODIMENTS

It should be noted that, terms used in specific implementations of embodiments of this application are merely used to explain the specific embodiments of this application, but are not intended to limit this application. In the descriptions of embodiments of this application, "/" means "or" unless otherwise specified. For example, A/B may represent A or B. In this specification, "and/or" describes only an association relationship for describing associated objects and indicates that three relationships may exist. For example, A and/or B may represent the following three cases: Only A exists, both A and B exist, and only B exists. In addition, in the descriptions of embodiments of this application, unless otherwise specified, "a plurality of" means two or more than two, and "at least one" and "one or more" mean one, two, or more than two.

The terms "first" and "second" mentioned below are used merely for the purpose of description, and shall not be construed as indicating or implying relative importance or implying a quantity of indicated technical features. Therefore, a feature limited by "first" or "second" may explicitly or implicitly include one or more such features.

Reference to "one embodiment", "some embodiments", or the like described in this specification means that a specific feature, structure, or characteristic described with reference to this embodiment is included in one or more embodiments of this application. Therefore, statements such as "in an embodiment", "in some embodiments", "in some other embodiments", and "in still some other embodiments" that appear in different parts in this specification do not necessarily refer to a same embodiment, but mean "one or more rather than all of embodiments", unless otherwise specifically emphasized in another manner. The terms "include", "include", "have", and variants thereof all mean "including but not limited to", unless otherwise specifically emphasized in another manner.

With the development of technologies and the increasing demands of consumers, an electronic device such as a mobile phone implements various functions by configuring various sensors. For example, the electronic device may be provided with a TOF sensor, a proximity light sensor, an ambient light sensor, a pressure sensor, a gyroscope sensor, and the like.

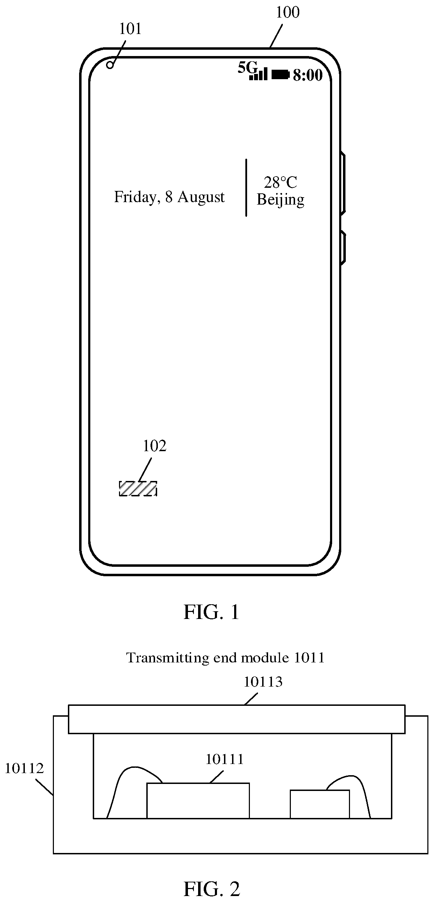

For example, with reference to FIG. 1, FIG. 1 is a diagram of an electronic device in a conventional technology. For example, the electronic device is a mobile phone. A TOF sensor 101 may be disposed on a front surface of the mobile phone 100, and 3D imaging may be performed using the TOF sensor 101, to implement a 3D face unlocking function. In another example, a camera (for example, a front camera) of the mobile phone 100 may achieve, with the assistance of the TOF sensor 101, focusing and depth of field judgment during photographing for background blurring or the like.

The TOF sensor 101 may include a transmitting end module and a receiving end module.

With reference to FIG. 2, FIG. 2 is a diagram of a structure of a transmitting end module of a TOF sensor 101 according to some embodiments in a conventional technology. As shown in FIG. 2, the transmitting end module 1011 may include a first light source 10111, a substrate 10112, and a diffuser (diffuser) 10113. The substrate 10112 may be electrically connected to a processor, and the diffuser 10113 may be disposed on a light-exiting side of the light source 10111 to diffuse light emitted by the first light source 10111.

The first light source 10111 may be a laser emitter, such as a vertical cavity surface-emitting laser (vertical cavity surface-emitting laser, VCSEL) or an edge-emitting laser (edge-emitting laser, EEL).

The substrate 10112 may be electrically connected to the processor of the electronic device, and the substrate 10112 may be a printed circuit board (printed circuit board, PCB). A ceramic substrate, a resin substrate, a copper substrate, or the like may be used as a material of the substrate 10112.

The diffuser 10113 may be disposed on the light-exiting side of the first light source 10111, and the diffuser 10113 can diffuse light emitted by the first light source 10111, so that more light reaches a target object.

The receiving end module may include an optical lens, a filter, and an image sensor. The filter is located between the optical lens and the image sensor. The filter is configured to filter light, to allow infrared light to pass through.

The first light source 10111 may simultaneously provide a plurality of infrared rays for the target object, and the plurality of infrared rays respectively reach different positions of a reflection surface of the target object. After being reflected by the reflection surface of the target object, the plurality of infrared rays may reach different photosensitive pixels in a pixel layer of the image sensor after sequentially passing through the optical lens and the infrared filter, and are sensed by the corresponding photosensitive pixels, so that corresponding electrical signals are generated. Based on times of flight of the infrared rays sensed by the different photosensitive pixels, information about distances between the different positions of the reflection surface of the target object and the image sensor can be obtained. In this way, depth information is generated, 3D image information is generated, to assist the electronic device in implementing a corresponding function such as a 3D face unlocking function.

It should be noted that, FIG. 2 is only a schematic illustration of the structure of the TOF sensor 101, and the TOF sensor 101 may further include other devices. For example, the transmitting end module 1011 may further include a photodiode (PD), a drive chip (driver IC), and the like.

Still Refer to FIG. 1. To increase a screen-to-body ratio, reduce a quantity of screen openings, and achieve a borderless screen, a proximity light sensor 102 is disposed below the screen of the electronic device, and the proximity light sensor 102 (proximity sensor, PS) is used. The proximity light sensor 102 emits infrared light to the target object, and the infrared light is reflected after reaching the target object. The proximity light sensor 102 senses a distance of the target object by receiving intensity of the infrared light reflected by the target object. A closer distance indicates stronger intensity of the reflected infrared light received by the proximity light sensor 102. A farther distance indicates weaker intensity of the reflected infrared light received by the proximity light sensor 102. Therefore, the proximity light sensor 102 can be used to detect whether an object is approaching the electronic device, so that screen-off during a call can be implemented to avoid a misoperation.

It should be noted that, that the proximity light sensor 102 is disposed below the screen of the electronic device means that the proximity light sensor 102 is disposed below a display screen of the electronic device. In other words, the proximity light sensor 102 is disposed on a side of the display screen away from a display surface of the display screen. The proximity light sensor 102 may be fixed on a main circuit board of the electronic device, and located between the main circuit board and the display screen.

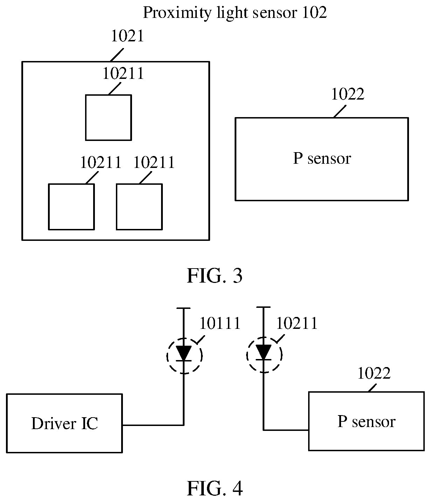

With reference to FIG. 3, FIG. 3 is a diagram of a structure of a proximity light sensor according to some embodiments in a conventional technology. As shown in FIG. 3, the proximity light sensor 102 may include a transmitting module 1021 and a receiving sensor (P sensor) 1022.

The transmitting module 1021 may include a second light source 10211. There may be one or more second light sources 10211. The second light source 10211 may be a laser emitter, such as a vertical cavity surface-emitting laser (vertical cavity surface-emitting laser, VCSEL) or an edge-emitting laser (edge-emitting laser, EEL).

It should be noted herein that, because the light source of the proximity light sensor is currently disposed below the screen, to avoid abnormal screen display and meet a requirement on light-emitting intensity, a plurality of laser emitters with low light-emitting power are usually disposed below the screen as light sources of the proximity light sensor.

The requirement on light-emitting intensity refers to a minimum light-emitting intensity of reflected infrared light that the receiving sensor 1022 of the proximity light sensor 102 can receive.

Specifically, in this example, the transmitting module 1021 may include a plurality of second light sources 10211 (for example, three second light sources 10211 shown in FIG. 3). The second light source 10211 is configured to emit infrared light, so that the receiving sensor 1022 can receive reflected infrared light, thus achieving detection of whether an object is approaching an electronic device.

Usually, the TOF sensor 101 and the proximity light sensor 102 are independently disposed in the electronic device. For example, with reference to FIG. 4, FIG. 4 is a schematic of a structure of a circuit in which a current TOF sensor 101 drives a VSCEL to emit infrared light through a drive chip driver IC and a proximity light sensor 1022 drives a VSCEL to emit infrared light. To be specific, in the TOF sensor, a cathode of a VSCEL in a first light source 10111 is connected to the drive chip, and an anode of the VSCEL in the first light source 10111 is connected to a power supply. In the proximity light sensor, a cathode of a VSCEL in a second light source 10211 is connected to the receiving sensor 1022, and an anode of the VSCEL in the second light source 10211 is connected to a power supply. That is, the TOF sensor 101 and the proximity light sensor 102 are independent of each other. Consequently, more space inside the electronic device is occupied, and more space on the main circuit board of the electronic device is occupied.

To resolve the foregoing problem, an embodiment of this application provides a TOF sensing module. In the TOF sensing module provided in this embodiment of this application, a control end of a light source in the TOF sensing module is electrically connected to a receiving sensor of a proximity light sensor. In addition, through timing control, infrared light is provided for a TOF sensor and the proximity light sensor respectively through the light source, so that a quantity of light sources in a conventional proximity light sensor is effectively reduced. This is conducive to reducing a quantity of used devices, saving internal space of an electronic device, and reducing design complexity.

The TOF sensing module and the electronic device provided in embodiments of this application are described in detail below with reference to the accompanying drawings.

First, the electronic device in embodiments of this application is introduced. The electronic device may be, for example, a mobile phone, a wearable device (such as a smart watch, a smart band, smart glasses, or smart jewelry), a tablet computer, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), and another electronic device with a network connection function.

An example embodiment of the electronic device includes but is not limited to a device equipped with iOS^{®}, Android^{®}, Microsoft^{®}, Harmony OS (Harmony OS), or other operating systems. The electronic device may alternatively be another electronic device such as a laptop computer (laptop) having a touch-sensitive surface (for example, a touch panel), and a specific type of the electronic device is not limited in embodiments of this application.

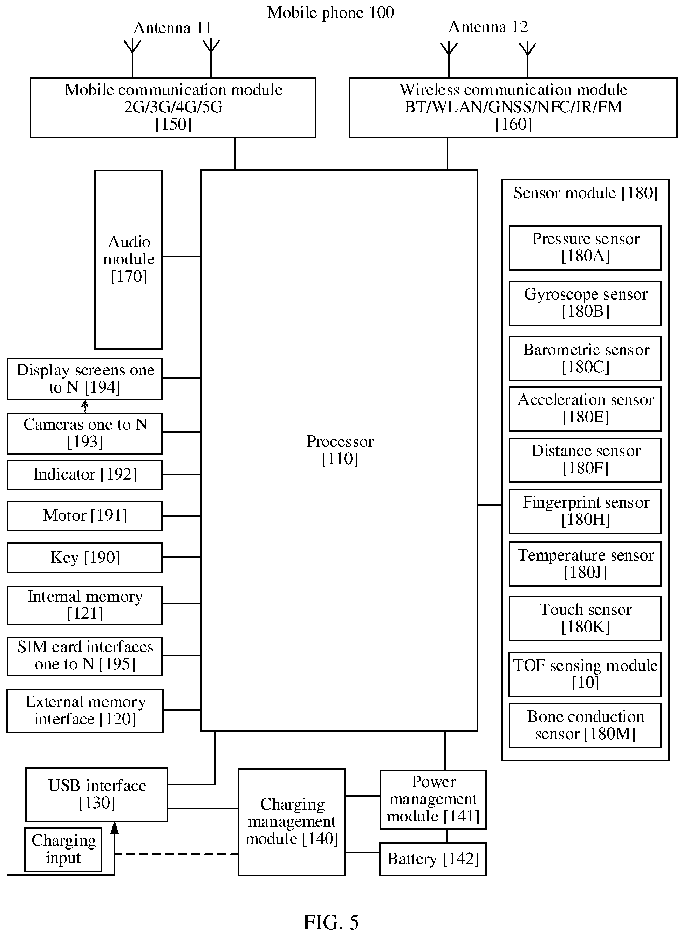

For example, the electronic device is a mobile phone, as shown in FIG. 5, which is a diagram of a structure of the mobile phone according to an embodiment of this application.

FIG. 5 is the diagram of the structure of the mobile phone 100. The mobile phone 100 may include a processor 110, an external memory interface 120, an internal memory 121, a universal serial bus (universal serial bus, USB) interface 130, a charging management module 140, a power management module 141, a battery 142, an antenna 11, an antenna 12, a mobile communication module 150, a wireless communication module 160, an audio module 170, a sensor module 180, a key 190, a motor 191, an indicator 192, a camera 193, a display screen 194, a subscriber identification module (subscriber identification module, SIM) card interface 195, and the like. The sensor module 180 may include a TOF sensing module 10, a pressure sensor 180A, a gyroscope sensor 180B, a barometric sensor 180C, a magnetic sensor 180D, an acceleration sensor 180E, a distance sensor 180F, a fingerprint sensor 180H, a temperature sensor 180J, a touch sensor 180K, a bone conduction sensor 180M, and the like.

It may be understood that an example structure in this embodiment of the present invention does not constitute a specific limitation on the mobile phone 100. In some other embodiments of this application, the mobile phone 100 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may be a nerve center and a command center of the mobile phone 100. The controller may generate an operation control signal based on instruction operation code and a timing signal, to complete control of fetching an instruction and executing the instruction.

A memory may also be disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of I2C buses. The processor 110 may be coupled to the touch sensor 180K, a charger, a flash, the camera 193, and the like through different I2C bus interfaces respectively. For example, the processor 110 may be coupled to the touch sensor 180K through the I2C interface, so that the processor 110 communicates with the touch sensor 180K through the I2C bus interface, to implement a touch function of the mobile phone.

The MIPI interface may be configured to connect the processor 110 to a peripheral device such as the display screen 194 and the camera 193. The MIPI interface include a camera serial interface (camera serial interface, CSI), a display serial interface (display serial interface, DSI), and the like. In some embodiments, the processor 110 communicates with the camera 193 through the CSI interface, thereby implementing a photographing function of the mobile phone. The processor 110 communicates with the display screen 194 through the DSI interface, thereby implementing a display function of the mobile phone. The MIPI interface may also be used in RFFE wireless signal processing, in other words, a device in an FEM may be controlled through the MIPI interface.

The GPIO interface may be configured by software. The GPIO interface may be configured to transmit a control signal, or may be configured to transmit a data signal. In some embodiments, the GPIO interface may be configured to connect the processor 110 to the camera 193, the display screen 194, the wireless communication module 160, the audio module 170, the sensor module 180, and the like. The GPIO interface may also be configured as an I2C interface, an I2S interface, a UART interface, a MIPI, or the like.

The USB interface 130 is an interface that complies with the USB standard specification, and may be specifically a Mini USB interface, a Micro USB interface, a USB Type-C interface, or the like. The USB interface 130 may be configured to connect to a charger to charge the mobile phone, may be configured to perform data transmission between the mobile phone and a peripheral device, and may be configured to connect to a headset to play audio through the headset. The interface may also be configured to connect to another mobile phone such as an AR device.

It may be understood that an interface connection relationship between the modules illustrated in this embodiment is merely an example for description and does not constitute a limitation on the structure of the mobile phone. In some other embodiments of this application, the mobile phone may alternatively use an interface connection manner different from that in the foregoing embodiment or use a combination of a plurality of interface connection manners.

A wireless communication function of the mobile phone may be implemented through the antenna 11, the antenna 12, the mobile communication module 150, the wireless communication module 160, the modem processor, the baseband processor, and the like.

The antenna 11 and the antenna 12 are configured to transmit and receive an electromagnetic wave signal. Each antenna in the mobile phone may be configured to cover one or more communication frequency bands. Different antennas may also be multiplexed to improve utilization of the antennas. For example, the antenna 11 may be multiplexed into a diversity antenna of a wireless local area network. In some other embodiments, the antennas may be used with a tuning switch.

The mobile communication module 150 can provide a solution for wireless communication including 2G/3G/4G/5G and the like to be applied to the mobile phone. The mobile communication module 150 may include at least one filter, a switch, a power amplifier, a low noise amplifier (low noise amplifier, LNA), and the like. The mobile communication module 150 may receive an electromagnetic wave through the antenna 11, perform processing such as filtering and amplification on the received electromagnetic wave, and transfer a processed electromagnetic wave to the modem processor modem for demodulation. The mobile communication module 150 may further amplify a signal modulated by the modem processor modem, and convert an amplified signal into an electromagnetic wave for radiation through the antenna 11. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor modem may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal through an audio device (which is not limited to a speaker 170A, a receiver 170B, and the like), or displays an image or a video through the display screen 194. In some embodiments, the modem processor may be an independent device. In some other embodiments, the modem processor may be independent of the processor 110, and is disposed in a same device as the mobile communication module 150 or another functional module.

The wireless communication module 160 may provide a solution for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the mobile phone. The wireless communication module 160 may be one or more devices integrating at least one communication processing module. The wireless communication module 160 receives an electromagnetic wave by using the antenna 12, performs frequency modulation on and filtering processing on the electromagnetic wave signal, and sends a processed signal to the processor 110. The wireless communication module 160 may further receive a to-be-sent signal from the processor 110, perform frequency modulation on and amplify the to-be-sent signal, and convert the to-be-sent signal into an electromagnetic wave through the antenna 12 for radiation.

In some embodiments, in the mobile phone, the antenna 11 is coupled to the mobile communication module 150, and the antenna 12 is coupled to the wireless communication module 160, so that the mobile phone can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou satellite navigation system (beidou navigation satellite system, BDS), a quasi-zenith satellite system (quasi-zenith satellite system, QZSS), and/or a satellite-based augmentation system (satellite-based augmentation system, SBAS).

The display screen 194 is configured to display, for example, an image and a video. The display screen 194 includes a display panel. The display panel may adopt a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flex light-emitting diode, FLED), Minilized, MicroLed, Micro-oLed, a quantum dot light-emitting diode (quantum dot light-emitting diode, QLED), or the like. In some embodiments, the mobile phone may include one or N display screens 194, where N is a positive integer greater than 1.

The display screen 194 of the mobile phone may display a series of graphical user interfaces (graphical user interfaces, GUIs), and these GUIs are all home screens of the mobile phone. Usually, a size of the display screen 194 of the mobile phone is fixed, and only a limited quantity of controls can be displayed on the display screen 194 of the mobile phone. The control is a GUI element, and the control is a software component included in an application, and controls all data processed by the application and an interaction operation related to all the data. A user may interact with the control through direct manipulation (direct manipulation), to read or edit information about the application. Usually, the control may include visual interface elements such as an icon, a button, a menu, a tab, a text box, a dialog box, a status bar, a navigation bar, and a widget.

In some embodiments, the TOF sensing module 10 is disposed below the display screen 194 (where "below" refers to a side away from a side on which the user performs an input operation).

The mobile phone 100 may implement a photographing function through the TOF sensing module 10, the ISP, the camera 193, the video codec, the GPU, the display screen 194, the application processor, and the like.

The external memory interface 120 may be configured to connect to an external memory card such as a micro SD card, to extend a storage capability of the mobile phone. The external memory card communicates with the processor 110 through the external memory interface 120 to implement a data storage function, for example, to store files such as music and a video into the external memory card.

The internal memory 121 may be configured to store computer-executable program code. The executable program code includes instructions. The processor 110 runs the instructions stored in the internal memory 121, to execute various function applications and data processing of the mobile phone. For example, in this embodiment, the processor 110 may generate a geo-fence by executing the instructions stored in the internal memory 121. The internal memory 121 may include a program storage area and a data storage area. The program storage area may store an operating system, an application required by at least one function (such as a sound playback function and an image playback function), and the like. The data storage area may store data (such as audio data and an address book) created during use of the mobile phone, and the like. In addition, the internal memory 121 may include a high-speed random access memory, and may also include a non-volatile memory, for example, at least one magnetic disk storage device, a flash memory device, or a universal flash storage (universal flash storage, UFS). The processor 110 executes various function applications and data processing of the mobile phone by running the instructions stored in the internal memory 121 and/or instructions stored in a memory disposed in the processor.

The key 190 includes a power-on key, a volume key, and the like. The key 190 may be a mechanical key, or a touch key. The electronic device may receive a key input, and generate a key signal input related to user setting and function control of the electronic device.

The motor 191 may generate a vibration prompt. The motor 191 may be configured to provide a vibration prompt for an incoming call, and may be further configured to provide vibration feedback for a touch. For example, touch operations performed on different applications (for example, photographing and audio playback) may correspond to different vibration feedback effects. The motor 191 may also correspond to different vibration feedback effects for touch operations performed on different areas of the display screen 194. Different application scenarios (for example, a time reminder, information receiving, an alarm clock, and a game) may also correspond to different vibration feedback effects. Customization of a touch vibration feedback effect may also be supported.

The indicator 192 may be an indicator light, and may be configured to indicate a charging state or a power change, or may be further configured to indicate a message, a missed call, a notification, or the like.

The SIM card interface 195 is configured to be connected to a SIM card. The SIM card may be inserted into the SIM card interface 195 or removed from the SIM card interface 195, to come into contact with or be separated from the mobile phone. The mobile phone may support 1 or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be the same as or different from each other. The SIM card interface 195 may also be compatible with SIM cards of different types. The SIM card interface 195 may also be compatible with an external memory card. The mobile phone interacts with a network through a SIM card, to implement functions such as calling and data communication. In some embodiments, the mobile phone uses an eSIM, that is, an embedded SIM card. The eSIM card may be embedded into the mobile phone, and cannot be separated from the mobile phone.

The pressure sensor 180A is configured to sense a pressure signal, and may convert the pressure signal into an electrical signal. In some embodiments, the pressure sensor 180A may be disposed in the display screen 194. There are a plurality of types of pressure sensors 180A, such as a resistive pressure sensor, an inductive pressure sensor, and a capacitive pressure sensor. The capacitive pressure sensor may include at least two parallel plates having conductive materials. When a force is applied to the pressure sensor 180A, a capacitance between electrodes changes. The electronic device determines intensity of pressure based on a change of the capacitance. When a touch operation is performed on the display screen 194, the electronic device detects intensity of the touch operation through the pressure sensor 180A. The electronic device may also calculate a touch position based on a detected signal of the pressure sensor 180A. In some embodiments, touch operations performed at a same touch position but having different touch operation intensity may correspond to different operation instructions. For example, when a touch operation whose touch operation intensity is less than a first pressure threshold is performed on a short message application icon, an instruction for checking a short message is executed. When a touch operation whose touch operation intensity is greater than or equal to the first pressure threshold is performed on the short message application icon, an instruction for creating a new short message is executed.

The gyroscope sensor 180B may be configured to determine a motion posture of the electronic device. In some embodiments, angular velocities of the electronic device around three axes (that is, an x axis, a y axis, and a z axis) may be determined through the gyroscope sensor 180B. The gyroscope sensor 180B may be configured for image stabilization during photographing. For example, when the shutter is pressed, the gyroscope sensor 180B detects an angle at which the electronic device jitters, and calculates, based on the angle, a distance for which a lens module needs to compensate, and allows the lens to cancel the jitter of the electronic device through reverse motion, thereby implementing image stabilization. The gyroscope sensor 180B may further be configured for navigation and a motion sensing game scenario.

The barometric pressure sensor 180C is configured to measure barometric pressure. In some embodiments, the electronic device calculates an altitude through a barometric pressure value measured by the barometric pressure sensor 180C, to assist in positioning and navigation.

The acceleration sensor 180E may detect magnitudes of acceleration of the electronic device in various directions (generally in three axes). When the electronic device is static, magnitude and a direction of gravity may be detected. The acceleration sensor may be further configured to recognize a posture of the electronic device, is applied to switching between landscape and portrait modes, and is applied to a pedometer.

The distance sensor 180F is configured to measure a distance. In some embodiments, the electronic device detects a distance between a mouth of the user and the electronic device through the distance sensor 180F.

The fingerprint sensor 180H is configured to collect a fingerprint. The electronic device may implement fingerprint unlock, application lock accessing, fingerprint photographing, fingerprint-based call answering, and the like by using a feature of a collected fingerprint.

The touch sensor 180K is also referred to as a "touch device". The touch sensor 180K may be disposed on the display screen 194. The touch sensor 180K and the display screen 194 form a touchscreen, which is also referred to as a "touch screen". The touch sensor 180K is configured to detect a touch operation on or near the touch sensor 180K. The touch sensor may transfer a detected touch operation to the application processor to determine a type of a touch event. A visual output related to a touch operation may be provided through the display screen 194. In some other embodiments, the touch sensor 180K may alternatively be disposed on a surface of the electronic device at a position different from that of the display screen 194.

The TOF sensing module 10 may achieve 3D imaging, to achieve 3D face unlocking, or assist in focusing of the camera of the mobile phone 100, and achieve depth of field judgment during photographing, to implement a function such as background blurring. In addition, a light source 10a of the TOF sensing module 10 is connected to a proximity light receiving sensor 1022 (P sensor), so that infrared light is provided for a proximity light sensor through the light source, and whether an object is approaching the electronic device is detected. When detecting sufficient reflected light, the electronic device may determine that there is an object in the vicinity of the electronic device. When detecting insufficient reflected light, the electronic device may determine that there is no object in the vicinity of the electronic device. The electronic device may detect, by using the receiving sensor 1022, that the user holds the electronic device close to an ear for a call, so that automatic screen-off is implemented to achieve power saving. The TOF sensing module 10 may also be used in a smart cover mode or a pocket mode to automatically perform screen unlocking or locking.

Specifically, the light source 10a in the TOF sensing module 10 may provide infrared light for a TOF function and a proximity light function respectively in a time-division multiplexing manner. To be specific, when the mobile phone 100 uses the TOF function, the TOF sensing module 10 controls the light source 10a to emit first infrared light, and when the mobile phone 100 uses the proximity light function, the light source 10a is driven by the proximity light receiving sensor 1022 to emit second infrared light. The first infrared light is infrared light corresponding to the TOF function, and the second infrared light is infrared light corresponding to the proximity light function.

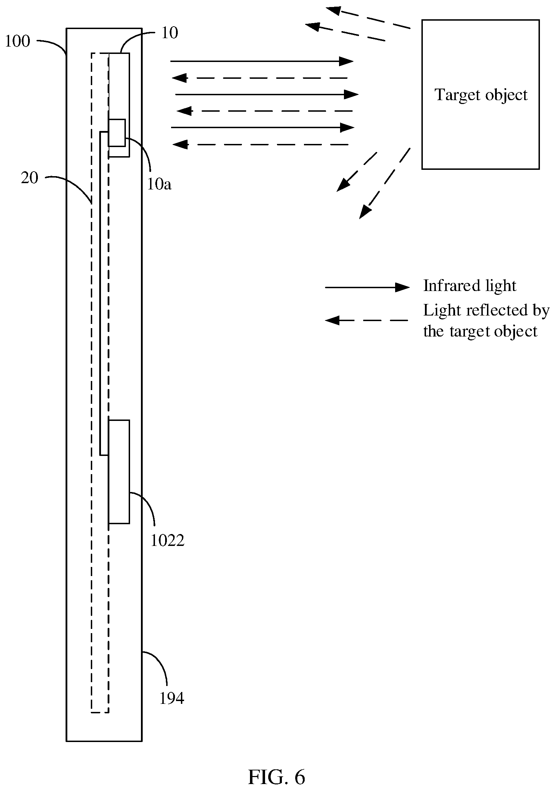

With reference to FIG. 6, FIG. 6 is a diagram of an operating state of a TOF sensing module 10 according to some embodiments of this application. The TOF sensing module 10 is located on a side of a display screen 194 away from a display surface of the display screen 194. The TOF sensing module 10 may be fixed on a main circuit board 20 and is located between the main circuit board 20 and the display screen 194. A proximity light receiving sensor 1022 (P sensor) may also be fixed on the main circuit board 20, and the receiving sensor 1022 and a light source 10a in the TOF sensing module 10 are connected (for example, electrically connected by using a wiring on the main circuit board 20). The display screen 194 may have a light-transmitting portion (not shown in the figure), and the light-transmitting portion may be configured for infrared light reflected by the TOF sensing module 10 to an object to pass through. The light-transmitting portion may also be configured for infrared light reflected by an object to pass through, so that the infrared light is received by a TOF of the TOF sensing module 10 or by the receiving sensor 1022.

In some embodiments, the light-transmitting portion may be a light-transmitting hole on the display screen of the electronic device shown in FIG. 1 (for example, the corresponding TOF sensor 101 in FIG. 1). Certainly, it may be understood that, in another embodiment, the light-transmitting portion may be divided into a first light-transmitting portion and a second light-transmitting portion spaced apart. The first light-transmitting portion is configured to transmit infrared light emitted from the light source 10a, and the second light-transmitting portion is configured to transmit infrared light reflected by the object.

When the light source 10a in the TOF sensing module 10 provides infrared light for a TOF function, the light source 10a is controlled by the TOF sensing module 10 to emit the first infrared light. The first infrared light is infrared light required to satisfy the TOF function. For example, the light source 10a in the TOF sensing module 10 may be an LED or a laser tube (such as a laser diode or a VCSEL) to emit high-frequency modulated pulsed light, which is infrared light with a frequency of 1000 MHz and a wavelength of 800 nm to 1000 nm. In addition, the infrared light required for the TOF has a high peak power. Infrared light reflected after the first infrared light reaches a target object may be received by a receiving end module (not shown in the figure) of the TOF sensing module 10, and times of flight of infrared light reflected at different positions of the target object are obtained, to obtain distances between a mobile phone and the different positions of the target object. In this way, depth information can be generated, and corresponding image information is generated, to assist the mobile phone in implementing the TOF function such as 3D face unlocking or depth of field judgment.

When the light source 10a in the TOF sensing module 10 provides infrared light for a proximity light function, the light source 10a is controlled by the receiving sensor 1022 to emit second infrared light. The second infrared light is infrared light required to satisfy the proximity light function. For example, a VSCEL in the light source 10a emits infrared light in a near-infrared spectral band, such as an infrared light pulse with a wavelength of 780 nm, 850 nm, or 940 nm. Infrared light reflected after the second infrared light reaches the target object may be received by the proximity light receiving sensor 1022, and a distance between the mobile phone and the target object is obtained through calculation, to determine whether an object is approaching the mobile phone 100. In this way, the proximity light function such as screen-off during a call is implemented.

It may be understood that when the mobile phone 100 is located in different scenarios, the light source 10a of the TOF sensing module 10 is required to provide different infrared light. That is, the mobile phone 100 may control, based on a scenario in which the mobile phone is located, the light source 10a to provide the different infrared light. For example, when the mobile phone 100 is in a screen-locked state and a 3D face unlocking function is used for unlocking, the mobile phone 100 controls the light source 10a to emit the first infrared light. In another example, when a user makes a call with the mobile phone 100, the mobile phone 100 controls the light source 10a to emit the second infrared light.

During specific applications, the mobile phone 100 may detect, through devices such as the display screen 194, a receiver 170B, a microphone 170C, a camera 193, a key 190, a mobile communication module 150, a wireless communication module 160, a pressure sensor 180A, a gyroscope sensor 180B, a barometric sensor 180C, a magnetic sensor 180D, an acceleration sensor 180E, a distance sensor 180F, a fingerprint sensor 180H, a temperature sensor 180J, a touch sensor 180K, and a bone conduction sensor 180M, the scenario in which the mobile phone 100 is located. For example, when the mobile phone 100 is in the screen-locked state and a power key is triggered by the user, the power key may send a detected trigger signal to a processor 110, and the processor 110 recognizes that the mobile phone 100 is in a scenario in which unlocking is required. In this case, the processor 110 outputs a control signal to the TOF sensing module 10, to control the light source 10a to emit the first infrared light, and control the receiving end module of the TOF sensing module 10 to receive and process infrared light reflected by the target object, to implement the 3D face unlocking function. In this case, a control port of the proximity light receiving sensor is in a high-resistance state.

It should be noted that, detection of the scenario in which the mobile phone 100 is located by the processor 110 through various devices of the mobile phone 100 is well known to a person skilled in the art, and details are not described herein again.

It may be understood that an example structure in this embodiment of the present invention does not constitute a specific limitation on the mobile phone 100. In some other embodiments of this application, the mobile phone 100 may include more or fewer components than those shown in the figure, or some components may be combined, or some components may be split, or components are arranged in different manners. The components shown in the figure may be implemented by hardware, software, or a combination of software and hardware. To implement the foregoing functions of the TOF sensing module 10, the TOF sensing module provided in embodiments of this application is described in detail with reference to the accompanying drawings. In the following description, for the purpose of illustration rather than limitation, specific details such as a specific system structure and a technology are proposed, to facilitate a thorough understanding of embodiments of this application.

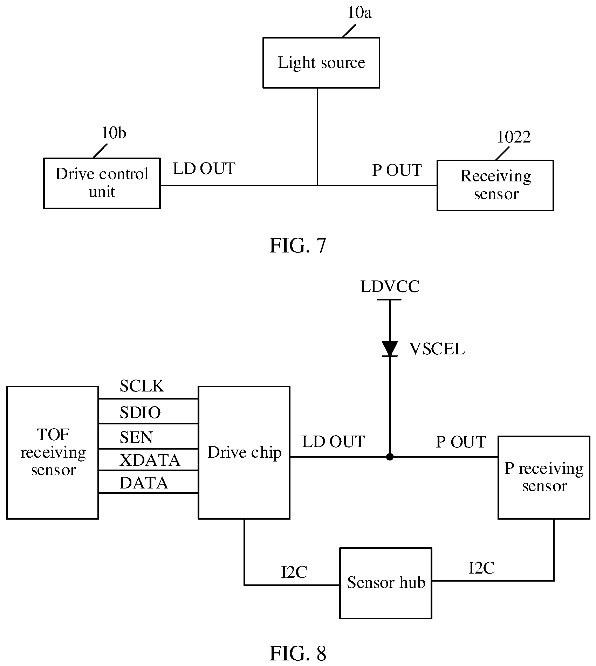

With reference to FIG. 7, FIG. 7 is a diagram of a structure of a TOF sensing module according to an embodiment of this application. As shown in FIG. 7, the TOF sensing module 10 provided in this embodiment of this application may include a light source 10a and a drive control unit (TOF Driver) 10b.

A control end of the light source 10a is electrically connected to a first control port LD OUT of the drive control unit 10b and a second control port P OUT of a proximity light receiving sensor 1022 respectively.

During specific implementations, an electronic device may send a control signal to the drive control unit 10b when the electronic device is located in a scenario in which a TOF function is used (for example, a scenario in which a screen is locked and unlocking is required or an image photographing scenario), and the first control port LD OUT of the drive control unit 10b drives the light source 10a to emit first infrared light. The electronic device may send a control signal to the receiving sensor 1022 when the electronic device is located in a scenario in which a proximity light function is used (for example, a call scenario or a pocket mode scenario), and the second control port P OUT of the receiving sensor 1022 drives the light source 10a to emit second infrared light.

In some embodiments, the light source 10a may include a laser emitter. A cathode of the laser emitter is a control end of the light source 10a, and an anode of the laser emitter is connected to a power supply.

For example, the light source 10a may be a vertical cavity surface-emitting laser (vertical cavity surface-emitting laser, VCSEL), and a cathode of the VCSEL is electrically connected to the first control port LD OUT of the drive control unit 10b and the second control port P OUT of the receiving sensor 1022 separately.

When the electronic device is located in the scenario in which the TOF function is used, a processor of the electronic device controls the second control port P OUT of the receiving sensor 1022 to be in a high-resistance state, and controls the first control port LD OUT of the drive control unit 10b to output a first driving signal, where the first driving signal is used for driving the VCSEL to emit the first infrared light.

When the electronic device is in a scenario in which the proximity light function is used, the processor of the electronic device controls the first control port LD OUT of the drive control unit 10b to be in a high-resistance state, and controls the second control port P OUT of the receiving sensor 1022 to output a second driving signal, where the second driving signal is used for driving the VCSEL to emit the second infrared light.

It should be noted that, in another embodiment, the light source 10a may alternatively be another light source capable of emitting infrared light, such as another type of laser-emitting device or light-emitting diode.

In this embodiment of this application, the processor may be a processor such as a system-on-chip (System-on-Chip, SOC), an AP (Application Processor), a sensor hub (sensor hub), or the like of the electronic device.

In this embodiment of this application, when the TOF emits infrared light, a specific drive control unit needs to be used to achieve modulation, to drive the laser emitter to emit infrared light required by the TOF function. For example, the drive control unit 10b may include a drive chip (driver IC). A first driving signal is output by the driver IC to drive the laser emitter to emit a modulated optical signal, for example, emit first infrared light with a high modulation frequency and a high peak power.

For example, the processor is the sensor hub. An output state of the first control port LD OUT of the driver IC and an output state of the second control port P OUT of the P sensor are controlled by the sensor hub. Specifically, when a mobile phone uses the TOF function, the sensor hub controls the control port LD OUT of the driver IC to output the first driving signal (which may be specifically a pulse modulation signal, a continuous pulse signal, or the like) capable of driving the VCSEL to emit the first infrared light, and controls the second control port P OUT of the P sensor to be in a high-resistance state and not to output the second driving signal. When the mobile phone uses the proximity light function, the sensor hub controls the second control port P OUT of the P sensor to output the second driving signal capable of driving the VCSEL to emit the second infrared light, and controls the first control port LD OUT of the driver IC to be in a high-resistance state and not to output the first driving signal.

Certainly, in another embodiment, the TOF sensing module may alternatively drive the laser emitter in another manner, and the foregoing is merely an example.

For example, with reference to FIG. 8, FIG. 8 is a schematic of a circuit of a TOF sensing module according to an embodiment of this application. As shown in FIG. 8, the TOF sensing module may further include a receiving end module, such as a TOF receiving sensor (TOF sensor).

The TOF sensor is connected to a driver IC, the driver IC is connected to a sensor hub, the sensor hub is further connected to a P receiving sensor (P sensor), an anode of a VCSEL is connected to a power supply LDVCC, and a cathode of the VCSEL is connected to a first control port LD OUT of the driver IC and a second control port P OUT of the P sensor separately.

The TOF sensor and the driver IC may be connected through an I2C bus, and the bus may include SCLK, SDIO, SEN, XDATA, and DATA. The sensor hub may be connected to the driver IC and the P sensor through the I2C bus separately.

Specifically, the TOF sensor may implement analysis of data of first infrared light reflected by a target object, and then obtain distance information of a plurality of positions of the target object, or obtain image information of the target object. In addition, the TOF sensor may further transmit back the obtained image information to the processor, and the processor executes control such as 3D face unlocking based on the image information of the target object.

The P sensor may implement analysis of data of second infrared light reflected by the target object, then obtain information about a distance between the target object and a mobile phone, and transmit back the obtained information about the distance between the target object and the mobile phone to the processor. The processor determines whether the target object is approaching the mobile phone, for example, compares the information about the distance with a preset threshold. If the information about the distance is less than the preset threshold, the processor determines that the target object is approaching the mobile phone. In this case, the processor may control the mobile phone to execute an operation of locking a screen, to reduce a misoperation during a call. If the information about the distance is not less than the preset threshold, the processor determines that the target object is not approaching the mobile phone. In this case, the processor does not control the mobile phone to lock the screen. In other words, the processor controls the mobile phone to maintain an unlocked state.

It can be seen from the foregoing that, according to the TOF sensing module 10 provided in this embodiment of this application, a light source in the TOF sensing module is multiplexed, and the light source in the TOF sensing module is configured to separately provide infrared light for a TOF function and a proximity light function. In this way, without changing an internal structure of the receiving end module of an original TOF sensor and an internal structure of an original P sensor, the TOF function and the proximity light function can be implemented, a quantity of light source devices in an original proximity light sensor can be reduced (for example, three laser emitters shown in FIG. 3 are saved), and design complexity is reduced. This is conducive to simplifying a structure of a device, and reducing hardware costs and saving space of an electronic device, and is easy to implement.

In the TOF sensing module 10 provided in this embodiment, because the P sensor and a diver IC share a cathode of a laser emitter, when the light source 10a emits the first infrared light, an equivalent capacitance of the TOF sensing module is additionally provided in a wire connecting the P sensor to the laser emitter. This may cause rise time (rise time, TR) and fall time (fall time, TF) of a laser emitted by the laser emitter to increase, thereby causing LC oscillation of the circuit and affecting emission and reception effects of infrared light. In view of this, another embodiment of this application provides a TOF sensing module.

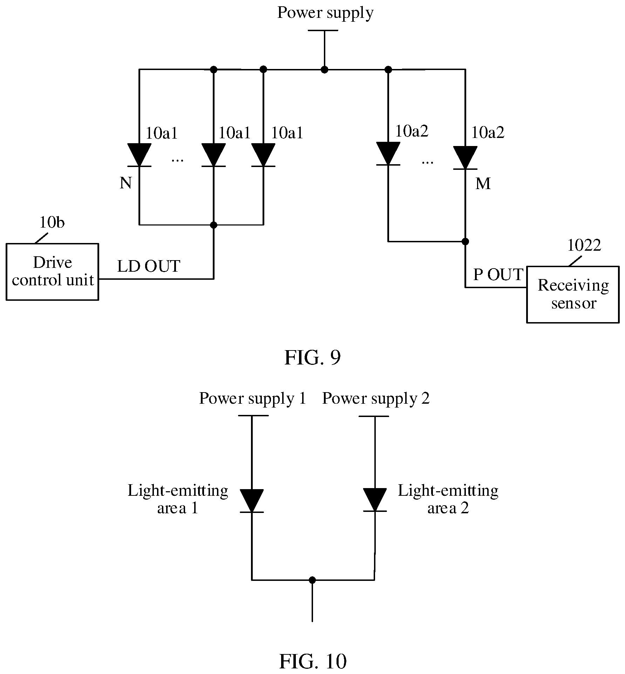

Refer to FIG. 9. In this embodiment of this application, a light source 10a (such as a laser emitter) in the TOF sensing module 10 may include N first light-emitting areas 10a1 and M second light-emitting areas 10a2. Anodes of the N first light-emitting areas 10a1 are commonly connected to anodes of the M second light-emitting areas 10a2. Cathodes of the N first light-emitting areas 10a1 are electrically connected to a first control port LD OUT of a drive control unit 10b in the TOF sensing module 10, and cathodes of the M second light-emitting areas 10a2 are electrically connected to a second control port P OUT of a proximity light receiving sensor 1022. N and M are positive integers.

It should be noted herein that, area-based control of a common laser emitter usually adopts a connection manner shown in FIG. 10, that is, a connection manner in which cathodes of different light-emitting areas are commonly connected and anodes of the different light-emitting areas are powered separately.

Different from the connection manner for the area-based control of the common laser emitter, a connection manner in which anodes of the first light-emitting area 10a1 and the second light-emitting area 10a2 are commonly connected (as shown in FIG. 9) is proposed in this embodiment of this application. The anodes of the first light-emitting area 10a1 and the second light-emitting area 10a2 are commonly connected to a same power supply, and cathodes are connected separately. To be specific, a cathode of the first light-emitting area 10a1 is connected to the control port of the drive control unit 10b of the TOF sensing module 10, and a cathode of the second light-emitting area 10a2 is connected to the control port of the proximity light receiving sensor 1022. In this way, the TOF sensing module 10 can control the first light-emitting area 10a1 to emit first infrared light through the drive control unit 10b, and can control the second light-emitting area 10a2 to emit second infrared light through a P sensor.

When a mobile phone 100 needs to use a TOF function, a first driving signal may be output through the first control port LD OUT of the drive control unit 10b of the TOF sensing module 10, to drive a VSCEL in the first light-emitting area 10a1 to emit the first infrared light. When the mobile phone 100 needs to use a proximity light function, a processor controls the second control port P OUT of the proximity light receiving sensor 1022 to output a second driving signal, to drive a VSCEL in the second light-emitting area 10a2 to emit the second infrared light.

A difference from the solutions shown in FIG. 7 or FIG. 8 is that, through the TOF sensing module 10 provided in this embodiment, the TOF function and the proximity light function can be simultaneously implemented because different light-emitting areas are used for providing infrared light for different functions. To be specific, while controlling the first control port LD OUT of the drive control unit 10b to output the first driving signal, the processor may control the second control port P OUT of the receiving sensor 1022 to output the second driving signal. In this way, while the first light-emitting area 10a1 emits the first infrared light, the second light-emitting area 10a2 emits the second infrared light.

In an embodiment of this application, the light source 10a may include a VSCEL array. VSCELs in the VSCEL array include VSCELs corresponding to the first light-emitting area 10a1 and VSCELs corresponding to the second light-emitting area 10a2. Anodes of all VSCELs in the VSCEL array are commonly connected to a power supply, cathodes of the VSCELs corresponding to the first light-emitting area 10a1 are connected to the control port LD OUT of the drive control unit 10b, and cathodes of the VSCELs corresponding to the second light-emitting area 10a2 are connected to the second control port P OUT of the proximity light receiving sensor.

A quantity of the VSCELs corresponding to the first light-emitting area 10a1 may be greater than a quantity of the VSCELs corresponding to the second light-emitting area 10a2. For example, with reference to FIG. 10, FIG. 10 is a diagram of a first light-emitting area 10a1 and a second light-emitting area 10a2 of a light source 10a.

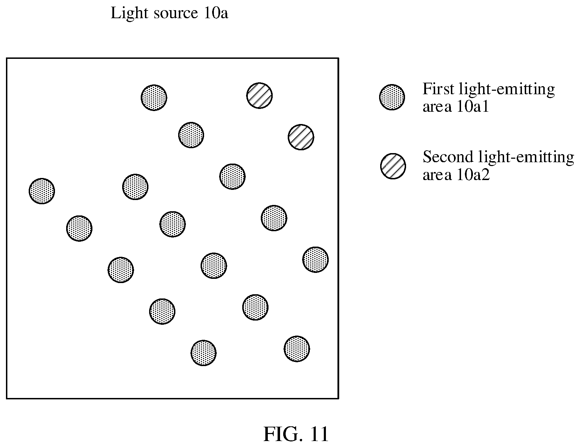

As shown in FIG. 11, circular holes in the figure represent window opening areas of the light source 10a. The light source 10a may emit laser light through the window opening areas. Specifically, one VSCEL is disposed below each window opening area. 15 window opening areas and 15 corresponding VSCELs are arranged in the first light-emitting area 10a1, and two window opening areas and two corresponding VSCELs are arranged in the second light-emitting area 10a2.

It should be noted that, the window opening area may alternatively be of any other shape. The quantity of the VSCELs corresponding to the second light-emitting area 10a2 is not limited to two, and a position of the window opening area corresponding to the second light-emitting area 10a2 is not limited to a position shown in FIG. 11. The quantity of the VSCELs corresponding to the second light-emitting area 10a2 and the position of the window opening area corresponding to the second light-emitting area 10a2 may be set based on actual requirements. Similarly, the quantity of the VSCELs corresponding to the first light-emitting area 10a1 is not limited to 15, and a position of the window opening area corresponding to the first light-emitting area 10a1 is not limited to a position shown in FIG. 11. The quantity of the VSCELs corresponding to the first light-emitting area 10a1 and the position of the window opening area corresponding to the first light-emitting area 10a1 may be set based on actual requirements.

It can be seen from the foregoing that the TOF sensing module provided in embodiments causes the TOF function and the proximity light function to work simultaneously. In addition, an equivalent capacitance of a TOF system is prevented from being additionally provided, thereby improving TOF performance.

The foregoing descriptions are merely specific implementations of embodiments of this application, but the scope of the protection of embodiments of this application is not limited thereto. Any variation or replacement within the technical scope disclosed in embodiments of this application shall fall within the scope of the protection of embodiments of this application. Therefore, the scope of the protection of embodiments of this application shall be subject to the scope of the protection of the claims.

## Claims

1. A TOF sensing module, applied to an electronic device, wherein the TOF sensing module comprises:
a light source, configured to emit first infrared light and second infrared light to a target object; and
a drive control unit, connected to a control end of the light source, and configured to drive, when the electronic device uses a TOF function, the light source to emit the first infrared light to the target object, wherein
the control end of the light source is further connected to a proximity light receiving sensor, and the receiving sensor is configured to drive, when the electronic device uses a proximity light function, the light source to emit the second infrared light to the target object.

2. The TOF sensing module according to claim 1, wherein the drive control unit comprises a first control port, and the receiving sensor comprises a second control port;
the control end of the light source is separately connected to the first control port and the second control port;
when the electronic device uses the TOF function, the first control port outputs a first driving signal to drive the light source to emit the first infrared light, and the second control port is in a high-resistance state; and
when the electronic device uses the proximity light function, the first control port is in a high-resistance state, and the second control port outputs a second driving signal to drive the light source to emit the second infrared light.

3. The TOF sensing module according to claim 1, wherein the light source comprises a laser emitter, a cathode of the laser emitter is the control end of the light source, and an anode of the laser emitter is connected to a power supply.

4. The TOF sensing module according to claim 3, wherein the drive control unit comprises a drive chip;
the drive chip is connected to a processor of the electronic device, and is configured to output a first driving signal based on a first control signal output by the processor; and
the processor is further connected to the receiving sensor, and the receiving sensor is further configured to output a second driving signal based on a second control signal output by the processor.

5. The TOF sensing module according to claim 1, wherein the TOF sensing module further comprises a receiving end module, and the receiving end module is configured to receive and analyze data of the first infrared light reflected by the target object, to obtain distance information of a plurality of positions of the target object; and
the receiving sensor is further configured to receive and analyze data of the second infrared light reflected by the target object, to obtain information about a distance between the target object and the electronic device.

6. The TOF sensing module according to any one of claims 1 to 5, wherein the light source comprises a first light-emitting area and a second light-emitting area;
an anode of the first light-emitting area and an anode of the second light-emitting area are commonly connected to the power supply;
a cathode of the first light-emitting area is connected to the drive control unit, and a cathode of the second light-emitting area is connected to the receiving sensor.

7. The TOF sensing module according to claim 6, wherein the light source comprises a VSCEL array; and
VSCELs in the VSCEL array comprise VSCELs corresponding to the first light-emitting area and VSCELs corresponding to the second light-emitting area.

8. The TOF sensing module according to claim 7, wherein a quantity of the VSCELs corresponding to the first light-emitting area is greater than a quantity of the VSCELs corresponding to the second light-emitting area.

9. An electronic device, comprising:
the TOF sensing module according to any one of claims 1 to 8;
a proximity light receiving sensor, wherein the receiving sensor is connected to a light source of the TOF sensing module; and
a processor, wherein the processor is separately connected to a drive control unit of the TOF sensing module and the receiving sensor, and is configured to: control, when the electronic device uses a TOF function, the drive control unit to drive the light source to emit first infrared light; and control, when the electronic device uses a proximity light source, the receiving sensor to drive the light source to emit second infrared light.

10. The electronic device according to claim 9, wherein the light source comprises a first light-emitting area and a second light-emitting area, and the processor is configured to: output a control signal to the drive control unit when the electronic device uses the TOF function, to cause the drive control unit to drive the first light-emitting area to emit the first infrared light; and output a control signal to the receiving sensor when the electronic device uses the proximity light function, to cause the receiving sensor to drive the second light-emitting area to emit the second infrared light.

11. A TOF sensing module, applied to an electronic device, wherein the TOF sensing module comprises:
a light source, configured to emit first infrared light and second infrared light to a target object; and
a drive control unit, connected to a control end of the light source, and configured to drive, when the electronic device uses a TOF function, the light source to emit the first infrared light to the target object, wherein
the control end of the light source is further connected to a proximity light receiving sensor, and the receiving sensor is configured to drive, when the electronic device uses a proximity light function, the light source to emit the second infrared light to the target object;
the light source comprises a first light-emitting area and a second light-emitting area;
an anode of the first light-emitting area and an anode of the second light-emitting area are commonly connected to a power supply.
a cathode of the first light-emitting area is connected to the drive control unit, and a cathode of the second light-emitting area is connected to the receiving sensor.

12. The TOF sensing module according to claim 11, wherein the drive control unit comprises a first control port, and the receiving sensor comprises a second control port;
the control end of the light source is separately connected to the first control port and the second control port;
when the electronic device uses the TOF function, the first control port outputs a first driving signal to drive the light source to emit the first infrared light, and the second control port is in a high-resistance state; and
when the electronic device uses the proximity light function, the first control port is in a high-resistance state, and the second control port outputs a second driving signal to drive the light source to emit the second infrared light.

13. The TOF sensing module according to claim 11, wherein the light source comprises a laser emitter, a cathode of the laser emitter is the control end of the light source, and an anode of the laser emitter is connected to the power supply.

14. The TOF sensing module according to claim 13, wherein the drive control unit comprises a drive chip;
the drive chip is connected to a processor of the electronic device, and is configured to output a first driving signal based on a first control signal output by the processor; and
the processor is further connected to the receiving sensor, and the receiving sensor is further configured to output a second driving signal based on a second control signal output by the processor.

15. The TOF sensing module according to claim 11, wherein the TOF sensing module further comprises a receiving end module, and the receiving end module is configured to receive and analyze data of the first infrared light reflected by the target object, to obtain distance information of a plurality of positions of the target object; and
the receiving sensor is further configured to receive and analyze data of the second infrared light reflected by the target object, to obtain information about a distance between the target object and the electronic device.

16. The TOF sensing module according to any one of claims 11 to 15, wherein the light source comprises a VSCEL array; and
VSCELs in the VSCEL array comprise VSCELs corresponding to the first light-emitting area and VSCELs corresponding to the second light-emitting area.

17. The TOF sensing module according to claim 16, wherein a quantity of the VSCELs corresponding to the first light-emitting area is greater than a quantity of the VSCELs corresponding to the second light-emitting area.
